# EUROPÄISCHE PATENTSCHRIFT

(11) **EP 2 510 609 B1**
(45) Veröffentlichungstag und Bekanntmachung des Hinweises auf die Patenterteilung: **26.03.2014**
(21) Anmeldenummer: 10784520.8
(22) Anmeldetag: 29.11.2010
(51) Int. Cl.: H02P 6/00

(54) **VERFAHREN ZUM BETREIBEN EINER BÜRSTENLOSEN GLEICHSTROMMASCHINE SOWIE GLEICHSTROMMASCHINE**
METHOD FOR OPERATING A BRUSHLESS DC MACHINE AND DC MACHINE
PROCÉDÉ POUR FAIRE FONCTIONNER UNE MACHINE À COURANT CONTINU SANS BALAIS ET MACHINE À COURANT CONTINU

(30) Priorität: 07.12.2009 DE 102009047574
(43) Veröffentlichungstag der Anmeldung: 17.10.2012
(73) Patentinhaber: Robert Bosch GmbH, 70442 Stuttgart (DE)
(72) Erfinder: DWERTMANN, Ingo, 76137 Karlsruhe (DE); FRUHAUF, Raphael, F-67400 Illkirch-Graffenstaden (FR); REHAGEN, Johannes, 76199 Karlsruhe (DE)
(86) Internationale Anmeldenummer: PCT/EP2010/068422
(87) Internationale Veröffentlichungsnummer: WO 2011/069856

(56) Entgegenhaltungen:
- DE-A1-102007 031 548
- JP-A- 2001 275 374
- US-A1- 2004 257 018

## Beschreibung

Die Erfindung betrifft ein Verfahren zum Betreiben einer bürstenlosen Gleichstrommaschine, die wenigstens einen Wicklungsstrang aufweist, dem eine Schaltbrücke mit mindestens zwei Halbleiterschaltern zugeordnet ist, die jeweils eine parallel geschaltete Freilaufdiode aufweisen. Die Erfindung betrifft weiterhin eine Gleichstrommaschine.

### Stand der Technik

Verfahren der hier angesprochenen Art sind aus dem Stand der Technik bekannt. Zum Betreiben von bürstenlosen Gleichstrommaschinen ist es notwendig, die Ströme des einen oder der mehreren Wicklungsstränge elektrisch zu kommutieren. Hierzu wird dem Wicklungsstrang eine Schaltbrücke mit mindestens zwei Halbleiterschaltern zugeordnet. Beispielsweise kann die Schaltbrücke eine Brückenschaltung im Sinne einer Vollbrücke sein und dabei vier Halbleiterschalter aufweisen. In der Regel sind derartige Brückenschaltungen als H-Brückenschaltung beziehungsweise als Vierquadrantensteller ausgebildet, wobei die Halbleiterschalter eine Gleichspannung in eine Wechselspannung variabler Frequenz und variabler Pulsbreite umwandeln können. Hierzu werden die Halbleiterschalter zum hochfrequenten Takten der Spannung des Wicklungsstrangs entsprechend hochfrequent angesteuert, um die Amplitude und die Form der Strangströme beeinflussen zu können. Dies dient in erster Linie der Leistungsbeziehungsweise Drehzahleinstellung des Gleichstrommotors. Darüber hinaus lässt sich dadurch auch eine Geräusch- und Verlustleistungsoptimierung durchführen. Anstatt der vorstehend beschriebenen Schaltung kann alternativ auch eine elektrische Maschine beziehungsweise Gleichstrommaschine mit drei Wicklungssträngen vorgesehen sein, welche jeweils an eine als Halbbrücke ausgebildete Schaltbrücke angeschiossen sind. Auf diese Weise ist eine dreiphasige Brückenschaltung realisiert. Eine solche Schaltung kann auch als B6-Motor-Topologie bezeichnet werden.

Sowohl für die Kommutierung als auch für die Taktung ist ein Freilaufkreis erforderlich, welcher den durch den Wicklungsstrang fließenden Strom weiterführen kann. Hierzu ist jedem der Halbleiterschalter eine Freilaufdiode in Sperrpolung parallel zugeordnet. Die Freilaufdiode kann dabei beispielsweise als externes Bauelement an den Halbleiterschalter gekoppelt sein oder alternativ in diesen integriert vorliegen, insbesondere wenn der Halbleiterschalter als MOSFET ausgebildet ist.

Offenlegungsschrift DE 10 2007 031 548 A1 offenbart ein Verfahren zur Symmetrierung der Belastung der Endstufenschalter durch periodische zeit- oder lagegesteuerte Umschaltung der Betriebsmodi zwischen einem Highside-Betrieb und einem Lowside-Betrieb. Dabei wird prinzipiell die Möglichkeit erwähnt, dass ein Freilauf als aktiver Freilauf oder als passiver Freilauf angesteuert werden kann.

Weiterhin ist aus der US 2004/0257018 A1 ein Verfahren zur Vermeidung von unkontrollierten Strömen im Fehlerfall einer Leistungsendstufe durch zusätzliche Halbleiterschalter bekannt.

Ferner offenbart Druckschrift JP 2001-275374 ein Verfahren zum kontrollierten Abbremsen eines Gleichstrommotors über einen Freilauf und eine Rückspeisung in ein Bordnetz. Dabei wird ebenfalls die prinzipielle Möglichkeit erwähnt, einen Freilauf aktiv oder passiv zu gestalten.

### Offenbarung der Erfindung

Das erfindungsgemäße Verfahren mit den Merkmalen des Anspruchs 1 sieht vor, dass die Halbleiterelemente in einem ersten Betriebsbereich zum Bilden eines aktiven Freilaufkreises und in einem zweiten Betriebsbereich zum Bilden eines passiven Freilaufkreises betätigt/angesteuert werden. Es ist somit vorgesehen, dass im Betrieb der Gleichstrommaschine die Schaltbrücke beziehungsweise die Halbleiterelemente der Schaltbrücke in verschiedenen Betriebsbereichen, bei denen ein Freilauf von Nöten ist, unterschiedlich betrieben werden. In dem ersten Betriebsbereich ist vorgesehen, dass ein aktiver Freilaufkreis geschaltet wird. In dem zweiten Betriebsbereich werden die Halbleiterelemente derart angesteuert, dass ein passiver Freilaufkreis gebildet wird. Der Freilaufkreis kann bei einer Vollbrückenschaltung sowohl "highside" als auch "lowside" entsprechend geschaltet werden.

Vorteilhafterweise wird zum Bilden des passiven Freilaufkreises ein erster Halbleiterschalter des Freilaufkreises geschlossen und ein zweiter Halbleiterschalter geöffnet. Durch den geschlossenen ersten Halbleiterschalter des Freilaufkreises kann der Strom somit über die Drain-Source-Strecke fließen, während bei dem zweiten, geöffneten Halbleiterschalter der Strom nur über die ihm zugeordnete Freilaufdiode fließen kann. Aufgrund der Sperrwirkung der Freilaufdiode kann der Strom dabei nur in eine Richtung durch den Freilaufkreis fließen. Der Freilaufstrom wird somit passiv gesteuert. Wie bereits vorstehend beschrieben, kann die Freilaufdiode als externes Bauteil der Freilaufdiode zugeordnet sein oder in diese integriert vorliegen.

Weiterhin ist mit Vorteil vorgesehen, dass zum Bilden des aktiven Freilaufkreises der erste Halbleiterschalter geschlossen und der zweite Halbleiterschalter invers zu einem treibenden dritten Halbleiterschalter getaktet wird. Es ist somit vorgesehen, dass ein dritter Halbleiterschalter als treibender Halbleiterschalter ausgebildet ist, beziehungsweise zum Treiben entsprechend getaktet angesteuert wird. Der zweite Halbleiterschalter wird dabei invers zu dem dritten Halbleiterschalter getaktet, sodass der zweite Halbleiterschalter geschlossen ist, wenn der dritte Halbleiterschalter geöffnet ist und anders herum. Dabei bleibt der erste Halbleiterschalter stets geschlossen. Hierdurch wird der Freilaufstrom statt über die Freilaufdioden der betroffenen Halbleiterschalter über die Drain-Source-Strecke geführt.

Zweckmäßigerweise wird dem treibenden dritten Halbleiterschalter ein PWM-Signal, also ein Pulsweitenmodulations-Signal zugeführt, mittels dessen der dritte Halbleiterschalter getaktet und die Amplitude und die Form der Strangströme beeinflusst wird.

Erfindungsgemäß ist vorgesehen, dass der erste Betriebsbereich bestimmt wird, wenn der Strom in dem Wicklungsstrang in nur eine Richtung fließt. Als Erkennungsmerkmal zum Einstellen des ersten Betriebsbereichs wird somit die Richtung des in dem Wicklungsstrang fließenden Stroms bestimmt beziehungsweise ermittelt. Der erste Betriebsbereich, in welchem der aktive Freilauf eingestellt wird, wird somit dann eingestellt, wenn davon ausgegangen wird, dass in dem Wicklungsstrang der Strom in nur eine Richtung fließt. Bevorzugt werden hierzu die induzierte Spannung und die angelegte Spannung erfasst. Fällt die induzierte Spannung kleiner aus als die mittlere angelegte Spannung, so kann sich der Strom in dem Wicklungsstrang nicht umkehren. Durch Betreiben des Freilaufkreises in diesem ersten Betriebsbereich als aktiver Freilaufkreislauf, wird eine durch die Freilaufdiode erzeugte Verlustspannung verringert, da der Strom über die Drain-Source-Strecke des Halbleiterelements geführt wird. Es ist dabei üblicherweise nicht notwendig, den Umschaltzeitpunkt für ein Umschalten zwischen dem ersten und dem zweiten Betriebsbereich beziehungsweise umgekehrt genau zu bestimmen. Das Umschalten kann vielmehr aufgrund modellhafter Annahmen vorgenommen werden, welche anhand des Betriebszustands der Gleichstrommaschine hergeleitet werden.

Weiterhin ist erfindungsgemäß vorgesehen, dass der zweite Betriebsbereich bestimmt wird, wenn ein Richtungswechsel des Stroms im Wicklungsstrang erwartet wird, beziehungsweise wenn die induzierte Spannung größer oder gleich der mittleren angelegten Spannung ist. Da in dem zweiten Betriebsbereich der Freilaufkreis als passiver Freilaufkreis ausgeführt wird, bei dem der Strom über die Freilaufdiode des zweiten Halbleiterschalters geführt wird, wird eine Umkehrung des Stroms in dem Freilaufkreis verhindert. Die Umkehrung des Stroms würde zu einem Bremsmoment führen, welches sowohl den Wirkungsgrad des Gleichstrommotors verringern als auch zu einer unerwünschten Geräuschentwicklung führen würde.

Zusätzlich oder alternativ ist vorgesehen, dass zwischen dem ersten und dem zweiten Betriebsbereich und umgekehrt nach einer bestimmten Zeitspanne und/oder eines bestimmten elektrischen Winkels umgeschaltet wird. Es wird somit zwischen dem ersten und dem zweiten Betriebsbereich hin- und hergeschaltet. Dies ist jeweils nach dem Ablauf der bestimmten Zeitspanne vorgesehen. Dabei können die Zeitspannen jedoch für den ersten und den zweiten Betriebsbereich jeweils unterschiedliche Werte annehmen. Insbesondere kann die Zeitspanne aufgrund eines Betriebszustands der Gleichstrommaschine, beispielsweise deren Drehzahl, festgelegt werden. Bei einer solchen Vorgehensweise müssen keine Messwerte vorliegen, das Umschalten zwischen den Betriebszuständen kann allein aufgrund von bekannten Werten erfolgen, die zum Beispiel geschätzt und/oder empirisch ermittelt werden können.

Eine Weiterbildung der Erfindung sieht vor, dass der Umschaltzeitpunkt in Abhängigkeit von einer gemessenen Drehzahl der Gleichstrommaschine, einer angelegten Betriebsspannung und/oder dem Gesamtmotorstrom bestimmt wird. Dabei kann die induzierte Spannung geschätzt werden. Sobald die so geschätzte induzierte Spannung einen bestimmten ersten Grenzwert unter- oder überschreitet, wird auf den zweiten Betriebsbereich umgeschaltet. Ebenso wird bei Unter- oder Überschreiten eines bestimmten zweiten Grenzwerts wieder auf den ersten Betriebsbereich umgeschaltet.

Schließlich ist vorgesehen, dass als Halbleiterschalter Transistoren, insbesondere MOSFETs (Metall-Oxid-Halbleiter-Feldeffekttransistoren) verwendet werden. Insgesamt bietet das beschriebene Verfahren somit den Vorteil, dass zum einen die Verlustleistung verringert, und zum anderen dennoch die Stromumkehr im Wicklungsstrang verhindert wird.

Die Erfindung betrifft weiterhin eine Gleichstrommaschine, insbesondere zur Umsetzung des Verfahrens gemäß den vorstehenden Ausführungen, die wenigstens einen Wicklungsstrang aufweist, dem eine Schaltbrücke mit mindestens zwei Halbleiterschaltern zugeordnet ist, die jeweils eine parallel geschaltete Freilaufdiode aufweisen. Dabei ist der erfindungsgemäßen Gleichstrommaschine mit den Merkmalen des Anspruchs 8 ein Steuergerät zugeordnet, dass die Halbleiterschalter in einem ersten Betriebsbereich zum Bilden eines aktiven Freilaufkreises und in einem zweiten Betriebsbereich zum Bilden eines passiven Freilaufkreises anzusteuert.

Im Folgenden soll die Erfindung anhand der Zeichnung näher erläutert werden. Dazu zeigen
- Figuren 1A bis D: eine Schaltbrücke für eine bürstenlose Gleichstrommaschine in unterschiedlichen Schaltzuständen,
- Figur 2: ein Ersatzschaltbild eines Wicklungsstrangs beziehungsweise der Gleichstrommaschine, und
- Figur 3: ein Ausführungsbeispiel eines vorteilhaften Verfahrens zum Betreiben der Gleichstrommaschine.

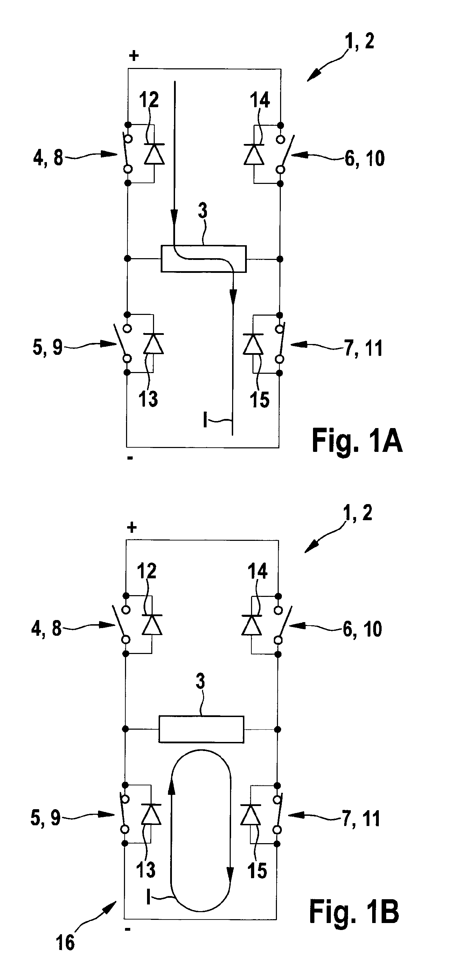

Die Figuren 1A bis D zeigen jeweils eine Schaltbrücke 1, die im Sinne einer Vollbrücke als H-Brückenschaltung beziehungsweise als Vierquadrantensteller 2 ausgebildet ist. Die Schaltbrücke 1 ist einem Wicklungsstrang 3 der Gleichstrommaschine zugeordnet und dient zum Beeinflussen der Amplitude und der Form des Stroms des Wicklungsstrangs 3. Hierdurch wird in erster Linie die Leistungs- beziehungsweise Drehzahleinstellung der Gleichstrommaschine durchgeführt, darüber hinaus dient die Schaltbrücke 1 aber auch zur Geräusch- und Verlustleistungsoptimierung.

Die Schaltbrücke 1 weist dazu vier Halbleiterschalter 4, 5, 6 und 7 auf, die jeweils als MOSFET-Schalter 8, 9, 10 und 11 ausgebildet sind. Jedem der Halbleiterschalter 4 bis 7 ist dabei eine Freilaufdiode 12, 13, 14 beziehungsweise 15 zugeordnet, die parallel zu dem jeweiligen Halbleiterschalter 4 bis 7 geschaltet ist. Die Halbleiterschalter 4 und 5 sowie die Halbleiterschalter 6 und 7 sind dabei jeweils in Reihe geschaltet, wobei zwischen den beiden Reihenschaltungen der Wicklungsstrang 3 der zu steuernden Gleichstrommaschine geschaltet ist. Alternativ kann auch eine Gleichstrommaschine mit drei Wicklungssträngen vorgesehen sein. Jeder der Wicklungsstränge ist in diesem Fall an eine als Halbbrücke ausgebildete Schaltbrücke angeschlossen. Es liegt dann folglich eine dreiphasige Brückenschaltung beziehungsweise eine B6-Motor-Topologie vor.

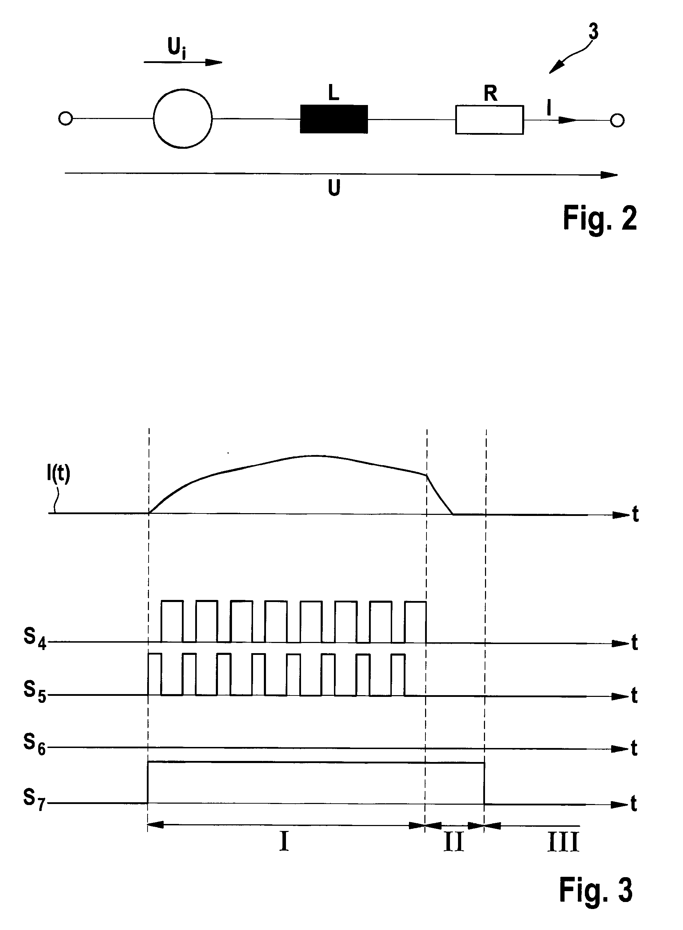

Das Ersatzschaltbild des Wicklungsstrangs beziehungsweise des Gleichstrommotors für die in den Figuren 1A bis 1D gezeigte Gleichstrommaschine ist beispielsweise in der Figur 2 dargestellt. Der induktive Anteil und der ohmsche Anteil des Wicklungsstrangs werden durch die Induktivität L sowie durch den in Reihe geschalteten Widerstand R dargestellt. Eine Spannungsquelle Uᵢ repräsentiert die für die durch die Läufer- beziehungsweise Rotordrehung induzierte Spannung. Aus dem Ersatzschaltbild ergibt sich die Spannung U des Wicklungsstrangs 3 sowie der Strom I. Die induzierte Spannung Uᵢ wechselt ihr Vorzeichen abhängig von der Winkellage des Rotors gegenüber dem Stator der Gleichstrommaschine. Ein positives (Antriebs-)Moment wird erzeugt, wenn der Strangstrom und die Strangspannung dieselbe Polarität aufweisen.

Die Figur 1A zeigt die Schaltbrücke 1 im Bestromungsfall. Hierbei sind die Halbleiterschalter 4 und 7 geschlossen und die Halbleiterschalter 6 und 9 geöffnet, sodass der Strom des Wicklungsstrangs 3 durch die Halbleiterschalter 4 und 7 fließt, getrieben durch die angelegte Strangspannung.

Die Figur 1B zeigt die Schaltbrücke 1 für den Betrieb in einem ersten Betriebsbereich, in welchem die induzierte Spannung kleiner ist als die mittlere angelegte Spannung, und der Strangstrom sich noch aufbaut und nicht umkehren kann. In diesem Fall wird ein aktiver Freilaufkreis 16 gebildet, indem der Halbleiterschalter 4 geöffnet und der Halbleiterschalter 5 geschlossen wird. Zweckmäßigerweise werden in dem ersten Betriebsbereich die Halbleiterschalter 4 und 5 invers getaktet. Zunächst fließt der Strom des Wicklungsstrangs 3 noch durch die Halbleiterschalter 5, 7 induktiv getrieben, nach Stromabbau getrieben durch die induzierte Spannung. Da der Halbleiterschalter 5 geschlossen ist, fließt der Strom dabei über die Drain-Source-Strecke des MOSFET 9 und nicht durch die Freilaufdiode 13. Da der aktive Freilaufkreis unter den oben genannten Voraussetzungen gebildet wird, findet keine Richtungsumkehr des Stroms statt. Bei entsprechender Ansteuerung der Halbleiterschalter 4 bis 7 kann der Freilaufbetrieb alternativ auch in dem oberen Abschnitt der Schaltbrücke 1 vorliegen, also zwischen den Halbleiterschaltern 4 und 6.

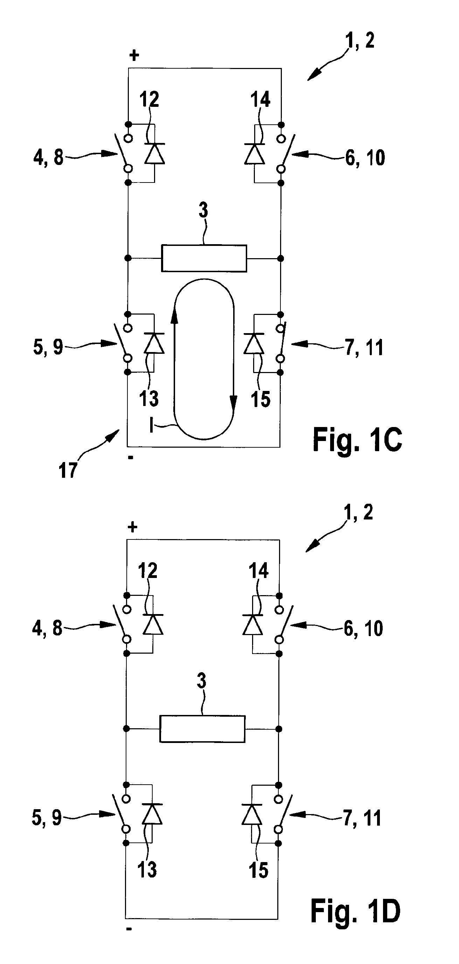

Die Figur 1C zeigt die Schaltbrücke in einem zweiten Betriebsbereich, bei dem die induzierte Spannung größer oder gleich der mittleren angelegten Spannung ist, und somit theoretisch ein Umkehren der Stromrichtung im Wicklungsstrang möglich ist. In diesem Fall wird vorteilhafterweise ein passiver Freilaufkreis 17 gebildet, in dem der Halbleiterschalter 5 dauerhaft geöffnet wird.

Durch Öffnen des Halbleiterschalters 5 fließt der Strom durch die Freilaufdiode 13 und die Drain-Source-Strecke des Halbleiterschalters 7. Da nunmehr die Freilaufdiode 13 Bestandteil des Freilaufkreises geworden ist, wird eine Richtungsumkehr des Stroms verhindert. Nach dem Abklingen des positiven Stroms bleibt dieser auf Null.

In der Figur 1D ist die Schaltbrücke 1 für den Fall dargestellt, in welchem die Gleichstrommaschine beziehungsweise der Wicklungsstrang 3 abgeschaltet ist. Hierzu werden alle Halbleiterelemente 4, 5, 6 und 7 geöffnet. Ein gegebenenfalls noch durch die Induktivität fließender Strom wird durch die Inversdioden beziehungsweise Freilaufdioden 10 und 13 zurück ins versorgende Netz gespeist. Ein erneuter Stromaufbau ist unabhängig von der Polarität der induzierten Spannung nicht möglich. Abweichend von dem oben beschriebenen Verfahren kann der Freilaufkreis 16 natürlich auch "highside" mittels der Halbeiterschalter 4, 6 entsprechend betrieben werden.

Die Figur 3 zeigt in einem Diagramm ein Ausführungsbeispiel für den Betrieb der Gleichstrommaschine mit der Schaltbrücke 1 gemäß den Figuren 1A bis 1D. Dazu zeigt die Figur 3 über die Zeit t dargestellt den Stromverlauf I(t) sowie die Schaltzustände S4, S5, S6, S7 der Halbleiterschalter 4, 5, 6, 7. In einem ersten Betriebsbereich I wird der treibende Halbleiterschalter 4 mit einem Pulsweitenmodulations-Signal (PWM-Signal) beaufschlagt, wie durch den Schaltzustand S4 im Bereich I dargestellt. Der in Reihe dazu geschaltete Halbleiterschalter 5 wird gemäß dem Ausführungsbeispiel der Figur 1B invers zu dem Halbleiterschalter 4 getaktet, wie durch die Schaltzustände S₄/S₅ im Bereich I dargestellt. Der Halbleiterschalter 6 ist geöffnet und der Halbleiterschalter 7 dauerhaft geschlossen. In dem ersten Betriebsbereich I werden die Halbleiterelemente 4 bis 7 somit zum Bilden des aktiven Freilaufkreises 16 angesteuert. Dadurch werden besonders geringe Verlustleistungen erzielt, insbesondere im Vergleich zu einem Freilaufkreis, bei dem Freilaufdioden genutzt werden. In dem zweiten Betriebsbereich II, wenn mit der Umkehr des Strangstroms gerechnet werden muss, wird die Schaltbrücke 1 auf den passiven Freilaufkreis 17, wie in der Figur 1C dargestellt, umgeschaltet, sodass der Halbleiterschalter 5 geöffnet und der Strom über die Freilaufdiode 13 getrieben wird. Dadurch kann sich die Stromrichtung nicht umkehren, sodass weder ein Bremsmoment noch zusätzliche Geräusche erzeugt werden. Der Zeitpunkt zum Umschalten kann dabei frei gewählt werden, liegt jedoch vorzugsweise in der Nähe des Winkels, bei dem der Strangstrom zwecks Umkommutierung abgeschaltet wird.

In dem dritten Betriebsbereich III ist der Wicklungsstrang 3 durch Öffnen sämtlicher Halbleiterschalter 4 bis 7 abgeschaltet.

Alternativ kann es auch vorgesehen sein, dass in dem zweiten Betriebsbereich II der Halbleiterschalter 4 (Schaltzustand S4) weiter getaktet wird, während der Halbleiterschalter 5 (Schaltzustand 5) geöffnet ist.

Das vorteilhafte Verfahren bietet somit zum einen eine deutlich geringere Verlustleistung im Vergleich zu einem rein passiven Freilaufkreis, und verhindert dennoch eine Stromrichtungsumkehr.

## Patentansprüche

1. Verfahren zum Betreiben einer bürstenlosen Gleichstrommaschine, die wenigstens einen Wicklungsstrang (3) aufweist, dem eine Schaltbrücke (1) mit mindestens zwei Halbleiterschaltern (4-7) zugeordnet ist, die jeweils eine parallel geschaltete Freilaufdiode (12-15) aufweisen, **dadurch gekennzeichnet, dass** im Betrieb der Gleichstrommaschine die Halbleiterschalter (4-7) in einem ersten Betriebsbereich zum Bilden eines aktiven Freilaufkreises (16) und in einem zweiten Betriebsbereich zum Bilden eines passiven Freilaufkreises (17) angesteuert werden, wobei der erste Betriebsbereich bestimmt wird, wenn der Strom in dem Wicklungsstrang (3) in nur eine Richtung fließen kann, und der zweite Betriebsbereich, wenn ein Richtungswechsel des Stroms in dem Wicklungsstrang (3) möglich ist.

2. Verfahren nach Anspruch 1, **dadurch gekennzeichnet, dass** zum Bilden des passiven Freilaufkreises (17) ein erster Halbleiterschalter (7) des Freilaufkreises geschlossen und ein zweiter Halbleiterschalter (5) geöffnet wird.

3. Verfahren nach einem der vorhergehenden Ansprüche, **dadurch gekennzeichnet, dass** zum Bilden des aktiven Freilaufkreises (16) der erste Halbleiterschalter (7) geschlossen und der zweite Halbleiterschalter (5) invers zu einem treibenden dritten Halbleiterschalter (4) getaktet wird.

4. Verfahren nach einem der vorhergehenden Ansprüche, **dadurch gekennzeichnet, dass** dem treibenden dritten Halbleiterschalter (4) ein PWM-Signal zugeführt wird.

5. Verfahren nach einem der vorhergehenden Ansprüche, **dadurch gekennzeichnet, dass** zwischen dem ersten und dem zweiten Betriebsbereich und umgekehrt nach einer bestimmten Zeitspanne oder einem bestimmten elektrischen Winkel umgeschaltet wird.

6. Verfahren nach einem der vorhergehenden Ansprüche, **dadurch gekennzeichnet, dass** der Umschaltzeitpunkt in Abhängigkeit von einer gemessenen Drehzahl der Gleichstrommaschine, einer angelegten Betriebsspannung und/oder dem Gesamtmotorstrom bestimmt wird.

7. Verfahren nach einem der vorhergehenden Ansprüche, **dadurch gekennzeichnet, dass** als Halbleiterschalter (4-7) Transistoren, insbesondere MOSFETs (8-11), verwendet werden.

8. Gleichstrommaschine, insbesondere zur Umsetzung des Verfahrens nach einem oder mehreren der vorhergehenden Ansprüche, die wenigstens einen Wicklungsstrang (3) aufweist, dem eine Schaltbrücke (1) mit mindestens zwei Halbleiterschaltern (4-7) zugeordnet ist, die jeweils eine parallel geschaltete Freilaufdiode (12-15) aufweisen, **dadurch gekennzeichnet, dass** der Gleichstrommaschine ein Steuergerät zugeordnet ist, das im Betrieb der Gleichstrommaschine die Halbleiterschalter (4-7) in einem ersten Betriebsbereich zum Bilden eines aktiven Freilaufkreises (16) und in einem zweiten Betriebsbereich zum Bilden eines passiven Freilaufkreises (17) ansteuert, wobei der erste Betriebsbereich bestimmt wird, wenn der Strom in dem Wicklungsstrang (3) in nur eine Richtung fließen kann, und der zweite Betriebsbereich, wenn ein Richtungswechsel des Stroms in dem Wicklungsstrang (3) möglich ist.

## Claims

1. Method for operating a brushless DC machine, which has at least one winding phase (3), with which a switching link (1) comprising at least two semiconductor switches (4-7) is associated, which semiconductor switches each have a freewheeling diode (12-15) connected in parallel, **characterized in that**, during operation of the DC machine, the semiconductor switches (4-7) are actuated in a first operating range so as to form an active freewheeling circuit (16) and in a second operating range so as to form a passive freewheeling circuit (17), wherein the first operating range is determined when the current in the winding phase (3) can only flow in one direction, and the second operating range is determined when a change in direction of the current in the winding phase (3) is possible.

2. Method according to Claim 1, **characterized in that**, in order to form the passive freewheeling circuit (17), a first semiconductor switch (7) of the freewheeling circuit is closed and a second semiconductor switch (5) is opened.

3. Method according to one of the preceding claims, **characterized in that**, in order to form the active freewheeling circuit (16), the first semiconductor switch (7) is closed and the second semiconductor switch (5) is clocked inversely to a driving third semiconductor switch (4).

4. Method according to one of the preceding claims, **characterized in that** a PWM signal is supplied to the driving third semiconductor switch (4).

5. Method according to one of the preceding claims, **characterized in that** there is switchover between the first and second operating ranges, and vice versa, after a certain time span or a certain electrical angle.

6. Method according to one of the preceding claims, **characterized in that** the switchover time is determined depending on a measured speed of the DC machine, an applied operating voltage and/or the total motor current.

7. Method according to one of the preceding claims, **characterized in that** transistors, in particular MOSFETs (8-11), are used as semiconductor switches (4-7).

8. DC machine, in particular for implementing the method according to one or more of the preceding claims, which DC machine has at least one winding phase (3), with which a switching link (1) having at least two semiconductor switches (4-7) is associated, which semiconductor switches each have a freewheeling diode (12-15) connected in parallel, **characterized in that** the DC machine has an associated control device, which, during operation of the DC machine, actuates the semiconductor switches (4-7) in a first operating range so as to form an active freewheeling circuit (16) and in a second operating range so as to form a passive freewheeling circuit (17), wherein the first operating range is determined when the current in the winding phase (3) can only flow in one direction, and the second operating range is determined when a change in direction of the current in the winding phase (3) is possible.

## Revendications

1. Procédé pour faire fonctionner une machine à courant continu sans balais, laquelle présente au moins une branche d'enroulement (3) à laquelle est associé un pont de commutation (1) comprenant au moins deux commutateurs à semiconducteur (4-7) qui présentent respectivement une diode de roue libre (12-15) branchée en parallèle, **caractérisé en ce que** lors du fonctionnement de la machine à courant continu, les commutateurs à semiconducteur (4-7) sont commandés dans une première plage de fonctionnement pour former un circuit de roue libre actif (16) et dans une deuxième plage de fonctionnement pour former un circuit de roue libre passif (17), la première plage de fonctionnement étant définie lorsque le courant dans la branche d'enroulement (3) ne peut circuler que dans un sens et la deuxième plage de fonctionnement lorsqu'un changement de sens du courant dans la branche d'enroulement (3) est possible.

2. Procédé selon la revendication 1, **caractérisé en ce que** pour former le circuit de roue libre passif (17), un premier commutateur à semiconducteur (7) du circuit de roue libre est fermé et un deuxième commutateur à semiconducteur (5) est ouvert.

3. Procédé selon l'une des revendications précédentes, **caractérisé en ce que** pour former le circuit de roue libre actif (16), le premier commutateur à semiconducteur (7) est fermé et le deuxième commutateur à semiconducteur (5) est cadencé à l'inverse d'un troisième commutateur à semiconducteur (4) menant.

4. Procédé selon l'une des revendications précédentes, **caractérisé en ce qu'**un signal PWM est acheminé au troisième commutateur à semiconducteur (4) menant.

5. Procédé selon l'une des revendications précédentes, **caractérisé en ce qu'**une permutation entre la première et la deuxième plage de fonctionnement et inversement est effectuée après un intervalle de temps défini ou un angle électrique défini.

6. Procédé selon l'une des revendications précédentes, **caractérisé en ce que** l'instant de permutation est défini en fonction d'une vitesse de rotation mesurée de la machine à courant continu, d'une tension de service appliquée et/ou du courant de moteur total.

7. Procédé selon l'une des revendications précédentes, **caractérisé en ce que** des transistors, notamment des MOSFET (8-11), sont utilisés en tant que commutateurs à semiconducteur (4-7).

8. Machine à courant continu, notamment pour mettre en oeuvre le procédé selon une ou plusieurs des revendications précédentes, laquelle présente au moins une branche d'enroulement (3) à laquelle est associé un pont de commutation (1) comprenant au moins deux commutateurs à semiconducteur (4-7) qui présentent respectivement une diode de roue libre (12-15) branchée en parallèle, **caractérisée en ce qu'**à la machine à courant continu est associé un contrôleur qui, lors du fonctionnement de la machine à courant continu, commande les commutateurs à semiconducteur (4-7) dans une première plage de fonctionnement pour former un circuit de roue libre actif (16) et dans une deuxième plage de fonctionnement pour former un circuit de roue libre passif (17), la première plage de fonctionnement étant définie lorsque le courant dans la branche d'enroulement (3) ne peut circuler que dans un sens et la deuxième plage de fonctionnement lorsqu'un changement de sens du courant dans la branche d'enroulement (3) est possible.
